# EUROPEAN PATENT APPLICATION

(11) **EP 1 437 725 A1**
(43) Date of publication of application: **14.07.2004**
(21) Application number: 02772867.4
(22) Date of filing: 19.09.2002
(51) Int. Cl.: G11B 7/26

(54) **METHOD FOR PRODUCING MULTILAYER OPTICAL RECORDING MEDIUM AND SYSTEM FOR PRODUCING MULTILAYER OPTICAL RECORDING MEDIUM**

(30) Priority: 20.09.2001 JP 2001286869
(71) Applicant: TDK Corporation, Tokyo 103-8272 (JP)
(72) Inventor: KOMAKI, Tsuyoshi, c/o TDK Corporation, Chuo-ku, Tokyo 103-8272 (JP); USAMI, Mamoru, c/o TDK Corporation, Chuo-ku, Tokyo 103-8272 (JP); YONEYAMA, Kenji, c/o TDK Corporation, Chuo-ku, Tokyo 103-8272 (JP)
(74) Representative: HOFFMANN EITLE
(86) International application number: PCT/JP2002/009652
(87) International publication number: WO 2003/028024

(57) **Abstract**

A method of manufacturing a multilayer optical recording medium, according to the present invention, is a method of manufacturing a multilayer optical recording medium by forming two recording layers deposited, with a spacer layer sandwiched therebetween, on a substrate (D), wherein in forming the spacer layer between the second recording layer (L1) and the first recording layer, as counted from an incident direction of a laser beam, a rubber chuck (14) which can undergo elastic deformation at least in radial directions to close a central mounting hole (1a) of the substrate (D) is caused to undergo elastic deformation to cause the rubber chuck to perform chucking to thereby fix the substrate (D) having the recording layer (L1) formed thereon on a turntable (12); after a coating liquid (R) for forming the spacer layer is dropped in the vicinity of a boundary portion between a peripheral surface of the rubber chuck (14) and the substrate (R), the rubber chuck (14) is caused to chuck a stamper (21) for forming the first recording layer thereon while allowing the stamper (21) to be placed over the substrate (D); and then the turntable (12) is rotated to thereby spin-coat the coating liquid. This makes it possible to form a spacer layer having a uniform layer thickness while preventing intrusion of air bubbles, without leading to high manufacturing costs.

## Description

### Technical Field

This invention relates to a method of manufacturing a multilayer optical recording medium having a plurality of recording layers deposited with a spacer layer sandwiched therebetween, and a multilayer recording medium-manufacturing apparatus.

### Background Art

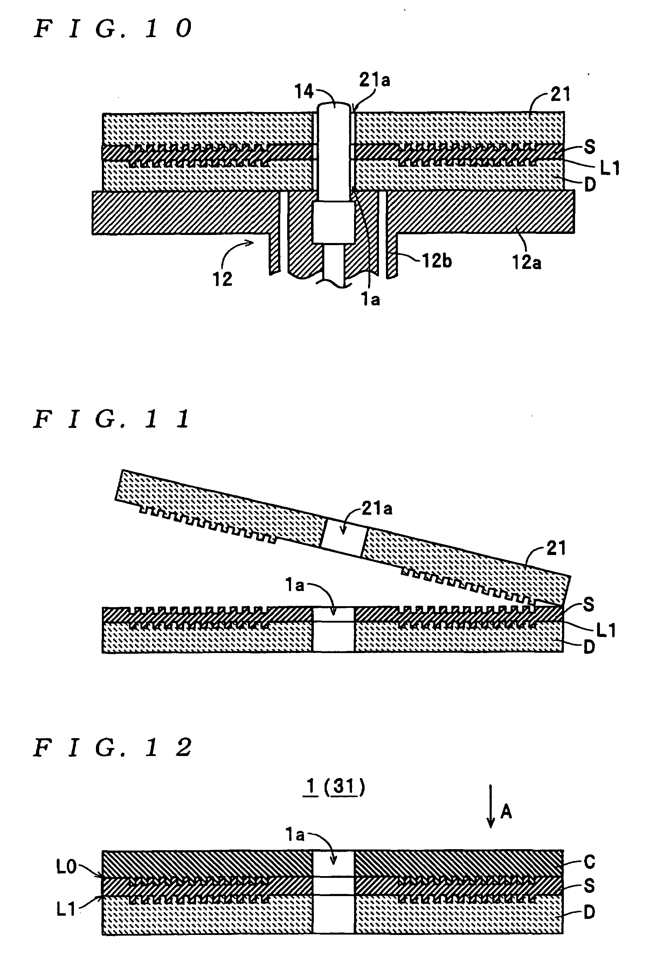

The present applicant has developed a multilayer optical recording medium 31 shown in FIG. 12 as one of the above-mentioned kind. This multilayer optical recording medium 31 has a recording layer L1, a spacer layer S, a recording layer L0, and a cover layer C sequentially deposited on a disk-shaped substrate D having a mounting central hole 1a formed through a central portion thereof. In this multilayer optical recording medium 31, the recording layer L1 is comprised of a reflective film for reflecting a laser beam set to a recording power and applied for recording and a laser beam set to a reproducing power and applied for reproduction (each of which is hereinafter also simply referred to as "the laser beam" when it is not required to make a distinction between the two laser beams), a phase change film whose optical reflectance is changed with a change in an optical constant caused by application of the laser beam set to the recording power, and a protective film for protecting the phase change film, which are sequentially deposited on grooves and lands formed on a surface of the substrate D. The spacer S is in the form of a thin film made of a light-transmissive resin such that it has a thickness of approximately 20 µm. On the other hand, the recording layer L0 is comprised of a phase change film, a protective film, and the like, sequentially deposited on grooves and lands formed on a surface of the spacer layer S. The cover layer C, which is a layer that not only protects the recording layer L0 from being scratched, but also functions as a part of an optical path (lens), is in the form of a thin film made of a light-transmissive resin. In the multilayer optical recording medium 31, a laser beam is applied in a direction indicated by an arrow A in FIG. 12, whereby recording of record data in the recording layers L0 and L1 or reading record data from the recording layers L0 and L1 is performed.

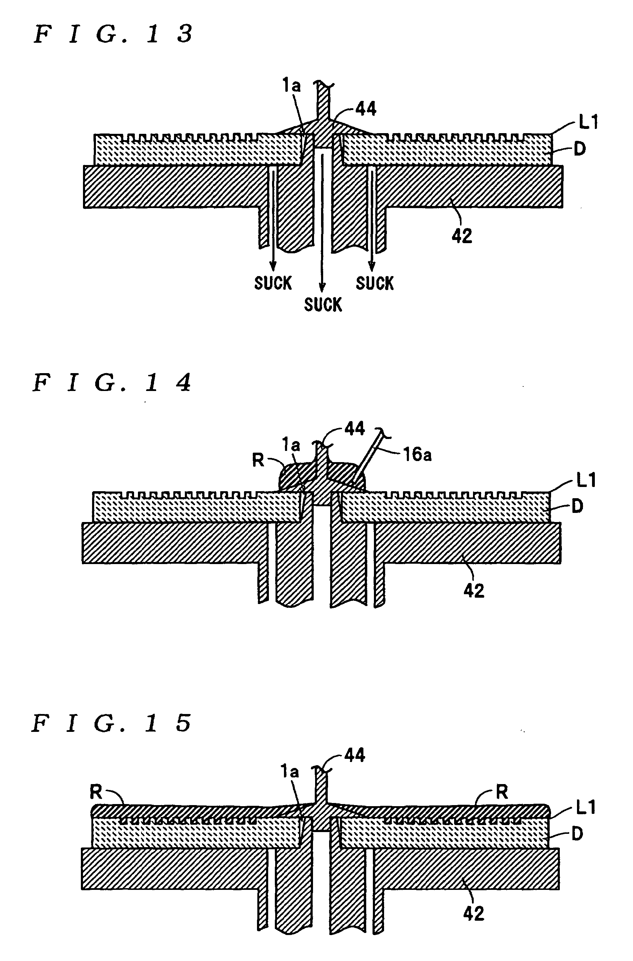

In manufacturing the multilayer optical recording medium 31, first, the recording layer L1 is formed on the substrate D e.g. by the sputtering method. Then, a coating liquid R is applied onto the recording layer L1 by the spin coating method to thereby form the spacer layer S. In doing this, first, the substrate D is placed on a turntable 42, with the surface having the recording layer L1 formed thereon facing upward, as shown in FIG. 13, and then a cover member 44 is placed over the substrate D. In this case, the turntable 42 is in the form of a disk with a flat upper surface. During application of the coating liquid R, the turntable 42 is rotated by a motor, not shown, in a state where the substrate D having its radially innermost portion (chucking area) sucked by negative pressure and the cover member 44 are placed thereon. The cover member 44 is in the form of an inverted circular saucer with a size large enough to cover a central portion of the substrate D where no resin layer is required to be formed. This cover member 44 is umbrella-shaped in side view, and sucked by the turntable 42 together with the substrate D, whereby the lower surface thereof is brought into intimate contact with the substrate D.

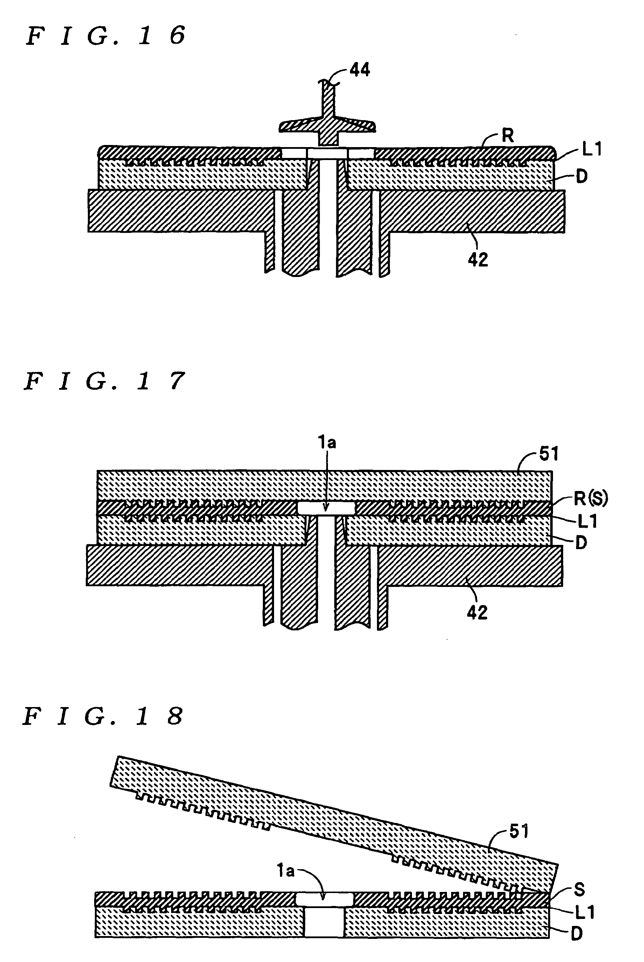

Next, the coating liquid R is dropped onto the upper surface of the cover member 44 from the tip of a nozzle 16a, as shown in FIG. 14, with the turntable 42 in the above-described state being rotated at a low speed. Then, the turntable 42 is rotated at a high speed to cause the coating liquid R on the cover member 44 to spread over the substrate D. In doing this, the rotational speed of the turntable 42 and a time period for maintaining high-speed rotation of the same are controlled as required, whereby the coating liquid R is radially moved from the cover member 44 onto the substrate D by centrifugal force generated by the rotation of the turntable 42. The coating liquid R having moved onto the substrate D further moves on the surface of the substrate D toward the outer periphery of the same. In the meantime, excess part of the coating liquid R having reached the outer periphery of the substrate D flies off the substrate D by the centrifugal force acting thereon. As a result, the entire surface of the substrate D is coated with a thin and substantially even film of coating liquid R as shown in FIG. 15. Then, as shown in FIG. 16, the cover member 44 is removed from the substrate D.

Next, as shown in FIG. 17, a stamper 51 is placed over the substrate D coated with the coating liquid R. In this case, the stamper 51 is formed of a material capable of transmitting ultraviolet rays for curing the coating liquid R as described hereinafter. Further, the stamper 51 has a lower surface thereof subjected to treatment for forming asperities, such as grooves, and lands, for the recording layer L0. Immediately after coating of the substrate D has been completed, the coating liquid R still has fluidity. Therefore, the stamper 51 is placed over the coating liquid R, with the coating liquid R conforming to the asperities of the stamper 51, i.e. the shapes of the grooves and the lands. Then, ultraviolet rays are applied to the substrate D in this state to cure the coating liquid R, whereby the spacer layer S is complete. Subsequently, the stamper 51 is removed as shown in FIG. 18. Thereafter, the recording layer L0 is formed on the spacer layer S, and then the cover layer C is formed by spin-coating the recording layer L0 with a resin and curing the resin on the recording layer L0. Thus, the manufacturing of the multilayer optical recording medium 31 is completed.

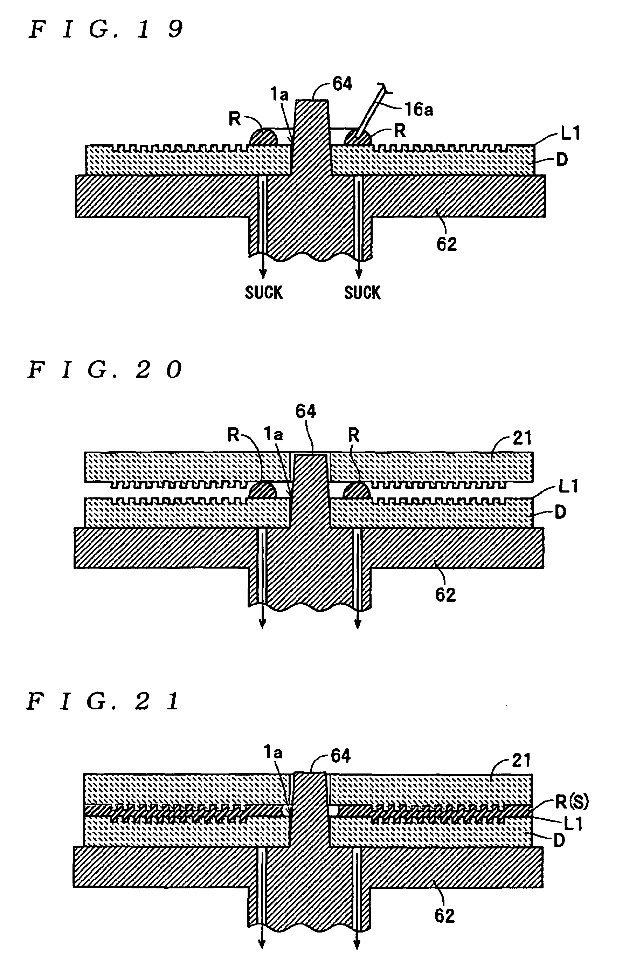

On the other hand, conventionally, a manufacturing method has also been known in which a coating liquid R is applied through processes illustrated in FIGS. 19 to 21. Hereafter, this method will be described. It should be noted that duplicate descriptions of processes similar to those of the above described manufacturing method are omitted. In the present manufacturing method, first, a substrate D having a recording layer L1 formed thereon e.g. by the sputtering method is placed on a turntable 62 as shown in FIG. 19. In doing this, the substrate D is placed on the turntable 62, with a central mounting hole 1a thereof being fitted on a metal center pin 64 erected from the central portion of the turntable 62. Then, the coating liquid R is applied onto a radially innermost portion of the substrate D such that it takes an annular shape, with care being taken to avoid deposition of the coating liquid R on the center pin 64. Subsequently, a stamper 21 is placed on the substrate D as shown in FIG. 20, and then the turntable 62 is rotated at a high speed by a motor, not shown, to cause the coating liquid R to spread over the substrate D. Also in this method, the rotational speed of the turntable 62 and a time period for maintaining rotation of the same are controlled as required, whereby the coating liquid R is radially moved on the substrate D by centrifugal force generated by the rotation of the turntable 62. As a result, the entire surface of the substrate D is coated with a thin and substantially even film of coating liquid R as shown in FIG. 21. Then, the stamper 21 is removed from the substrate D. Thereafter, a recording layer L0 is formed on the spacer layer S, and then a cover layer C is formed by spin-coating the recording layer L0 with a resin and curing the resin on the recording layer L0. Thus, the manufacturing of the multilayer optical recording medium 31 is completed.

### Disclosure of the Invention

From the study of the above described methods of manufacturing a multilayer optical recording medium, the present inventors found out the following points for improvement: In the former manufacturing method, after completion of spin-coating of the coating liquid R, the stamper 51 is placed over the substrate D coated with the coating liquid R. In this case, when the stamper 51 in the form of a flat plate is placed over the substantially evenly applied coating liquid R, air bubbles can intrude between the coating liquid R and the stamper 51. When ultraviolet rays are applied in this state, large recesses are formed in the surface of the spacer layer S due to intrusion of the air bubbles, which makes it difficult to perform normal reading and writing of record data. Therefore, when the stamper 51 is to be placed over the substrate D, it is required to carry the substrate D for which application of the coating liquid R is completed and the stamper 51 into a vacuum chamber, and then place the stamper 51 over the substrate D, to thereby prevent intrusion of air bubbles. Expensive equipment introduced for this purpose is a cause of high manufacturing costs of the multilayer optical recording medium 31, and hence improvement in this point is preferable.

On the other hand, in the latter manufacturing method, the coating liquid R is applied onto the radially innermost portion of the substrate D while avoiding deposition of the coating liquid R on the center pin 64. Therefore, in this state, a space is formed between the stamper 21 and the substrate D as shown in FIG. 20. In spin-coating, the presence of the space makes the coating thickness of the coating liquid R on the radially outermost portion of the substrate D larger than that on the radially innermost portion of the same, which makes it difficult to effect uniform coating of the coating liquid R. In this case, it is possible to apply the coating liquid R onto the substrate D such that it is deposited on the center pin 64, thereby preventing a space from being formed between the stamper 21 and the substrate D and uniformly coating the substrate D with the coating liquid R. However, when this coating method is employed, it is troublesome to clean the center pin 64. Further, coating liquid R having overflowed from a gap between the stamper 21 and the center pin 64 spoils the reverse surface (upper surface as viewed in FIG. 20) of the substrate D, which results in a reduced yield in the spin-coating process and high manufacturing costs.

The present invention has been made to solve the above described problems, and a main object thereof is to provide a method of manufacturing a multilayer optical recording medium, and a multilayer optical recording medium-manufacturing apparatus, which are capable of forming a spacer layer with uniform thickness while preventing intrusion of air bubbles, without leading to high manufacturing costs of the apparatus.

The method of manufacturing a multilayer optical recording medium, according to the present invention, is a method of manufacturing a multilayer optical recording medium, by forming N recording layers (N is a natural number equal to or larger than 2) deposited, with a spacer layer sandwiched therebetween, on a substrate having a central portion thereof formed with a central mounting hole, wherein in forming the spacer layer between an (M+1)-th recording layer (M is a natural number equal to or smaller than (N-1)) and an M-th recording layer, as counted from an incident direction of a laser beam to be applied during reproduction or a laser beam to be applied during recording, a central chuck which can undergo elastic deformation at least in radial directions to close the central mounting hole of the substrate is caused to undergo elastic deformation to perform chucking to thereby fix the substrate having the (M+1)-th recording layer formed thereon on a turntable; after a coating liquid for forming the spacer layer is dropped in the vicinity of a boundary portion between a peripheral surface of the central chuck and the substrate, the central chuck is caused to chuck the stamper while allowing the stamper for forming the M-th recording layer thereon to be placed over the substrate; and then the turntable is caused to rotate to thereby spin-coat the coating liquid.

In this method of manufacturing a multilayer optical recording medium, in forming the spacer layer between the (M+1)-th recording layer and the M-th recording layer, as counted from the incident direction of the laser beam to be applied during reproduction or the laser beam to be applied during recording, the central chuck is caused to perform chucking to thereby fix the substrate on the turntable; after the coating liquid for forming the spacer layer is dropped in the vicinity of the boundary portion between the peripheral surface of the central chuck and the substrate, the central chuck is caused to chuck the stamper while allowing the stamper to be placed over the substrate; and then the turntable is caused to rotate to thereby spin-coat the coating liquid, whereby it is possible to prevent intrusion of air bubbles when the stamper is placed over the substrate and when the coating liquid is drawn, without using expensive equipment, such as a vacuum chamber. As a result, it is possible carry out mass production of a non-defective multilayer optical recording medium while reducing the manufacturing costs of the same. Further, since the coating liquid is drawn with the stamper being placed over the substrate, the substrate and the stamper can be held in parallel with each other by centrifugal force, which makes it possible to make uniform the coating thickness of the coating liquid.

In this case, it is preferred that an energy radiation-curable resin coating liquid is used as the coating liquid for forming the spacer layer, and a stamper formed of an energy radiation-transmissive material is used as the stamper. In this case, the energy radiation includes ultraviolet rays and an electron beam (electro-beam). The use of these makes it possible to form the spacer layer in a shorter time, compared with a method using e.g. a thermosetting coating liquid that is cured by being heated, which contributes to sufficient reduction of the manufacturing costs of the multilayer optical recording medium.

The multilayer optical recording medium-manufacturing apparatus according to the present invention is a multilayer optical recording medium-manufacturing apparatus for forming the spacer layer in accordance with the method of manufacturing a multilayer optical recording medium, according to the present invention, and comprises a turntable on which the substrate is placed, a central chuck that has a smaller diameter than the central mounting hole of the substrate during non-chucking time, and is expanded by supply of air during chucking time, to close the central mounting hole, an air supply section for supplying air to the central chuck, a coating liquid-dropping section for dropping the coating liquid for forming the spacer layer, and a control section for controllably driving the air supply section and the coating liquid-dropping section.

This multilayer optical recording medium-manufacturing apparatus is provided with the central chuck that is expanded by supply of air during chucking time, to close the central mounting hole, whereby it is possible to mount and remove the substrate easily, and what is more, prevent intrusion of air bubbles when the stamper is placed over the substrate and when the coating liquid is drawn. As a result, it is possible to carry out mass production of an inexpensive and non-defective multilayer optical recording medium.

In this case, it is preferred that the central chuck has a surface thereof formed of a material having water-repellency or oil-repellency. In this case, it is possible to conduct fluorine treatment or silicone treatment on the surface of the material of the central chuck, thereby providing the material with water-repellency or oil-repellency. This configuration of the central chuck enables the substrate to be easily removed from the turntable after application of the coating of the coating liquid, so that it is possible to further reduce the manufacturing costs of the multilayer optical recording medium.

It should be noted that the present disclosure relates to the subject matter included in Japanese Patent Application No. 2001-286869 filed on September 20, 2001, and it is apparent that all the disclosures therein are incorporated herein by reference.

### Brief Description of Drawings

FIG. 1 is a block diagram showing the configuration of a coating apparatus 11 according to an embodiment of the present invention;
FIG. 2 is a perspective view of the appearance of a turntable 12 of the coating apparatus 11;
FIG. 3 is a side cross-sectional view of a state of a substrate D having been placed on the turntable 12;
FIG. 4 is a side cross-sectional view of a state of a coating liquid R having been dropped onto the substrate D fixed by expanding a rubber chuck 14;
FIG. 5 is a side cross-sectional view of a state of a stamper 21 having been placed over the substrate D in the FIG. 4 state;
FIG. 6 is a side cross-sectional view of a state of the stamper 21 placed over the substrate D where a rim of the opening of a central hole 21a and its vicinity of the stamper 21 and the coating liquid R are in contact with each other;
FIG. 7 is a side cross-sectional view of a further downward pushed state of the stamper 21 in the FIG. 6 state;
FIG. 8 is a side cross-sectional view of a state of the coating liquid R having been spread toward the outer periphery of the substrate D by centrifugal force generated by rotation of the turntable 12;
FIG. 9 is a side cross-sectional view of a state of the coating liquid R between the substrate D and the stamper 21 having reached the outer periphery of the substrate D;
FIG. 10 is a side cross-sectional view of a state of a rubber chuck 14 having returned (shrunk) to its original state after stoppage of air supply;
FIG. 11 is a side cross-sectional view of a state of the stamper 21 having been removed from the substrate D having a spacer layer S formed thereon;
FIG. 12 is a side cross-sectional view of a completely manufactured multilayer optical recording medium 1 (31);
FIG. 13 is a side cross-sectional view of a state of a substrate D and a cover member 44 having been placed on a turntable 42;
FIG. 14 is a side cross-sectional view of a state of a coating liquid R having been dropped onto the cover member 44;
FIG. 15 is a side cross-sectional view of a state of the coating liquid R having reached the outer periphery of the substrate D;
FIG. 16 is a side cross-sectional view of a state of the cover member 44 having been removed from the FIG. 15 state;
FIG. 17 is a side cross-sectional view of a state of a stamper 51 having been placed over the substrate D in the FIG. 16 state;
FIG. 18 is a side cross-sectional view of a state of the stamper 51 having been removed from the substrate D having a spacer layer S formed thereon;
FIG. 19 is a side cross-sectional view of a state of a substrate D on which a coating liquid R has been dropped during manufacturing of the multilayer optical recording medium 31 according to another conventional manufacturing method;
FIG. 20 is a side cross-sectional view of a state of the stamper 51 having been placed over the substrate D in the FIG. 19 state; and
FIG. 21 is a side cross-sectional view of a state of the coating liquid R having been applied.

### Best Mode for Carrying Out the Invention

Hereinafter, preferred embodiments of a method of manufacturing a multilayer optical recording medium and a multilayer recording medium-manufacturing apparatus, according to the present invention, will be described with reference to the accompanying drawings.

First of all, the structure of the multilayer optical recording medium 1 will be described with reference to FIG. 12.

The multilayer optical recording medium 1 is constructed by sequentially depositing a recording layer L1 corresponding to an (M+1)-th (M = 1) recording layer in the present invention, a spacer layer S, a recording layer L0 corresponding to an M-th recording layer (M = 1) in the present invention, and a cover layer C, on a substrate D, such that record data can be read or recorded by applying a laser beam set to a reproducing power or a laser beam set to a recording power, onto the multilayer optical recording medium 1 from a cover layer C side. The substrate D is formed by injection molding such that it is disk-shaped (flat plate-shaped) with a diameter of approximately 120 mm. Further, the substrate D has a central portion thereof formed with a central mounting hole 1a having a diameter of approximately 15 mm, for use when the substrate D is mounted in a recording and reproducing apparatus, and a radially outer portion thereof formed with such as grooves, lands, and pits for the recording layer L1. The recording layer L1 is formed by forming a reflective film, such as a phase change film, and a protective film, on the substrate D by the sputtering method. The spacer layer S is formed on the recording layer L1 using a light-transmissive coating liquid R, such that it has a thickness of approximately 20 µm. Further, on the surface of the spacer layer S, such as grooves, lands, and pits for forming the recording layer L0 are formed by a stamper 21, as described hereinafter.

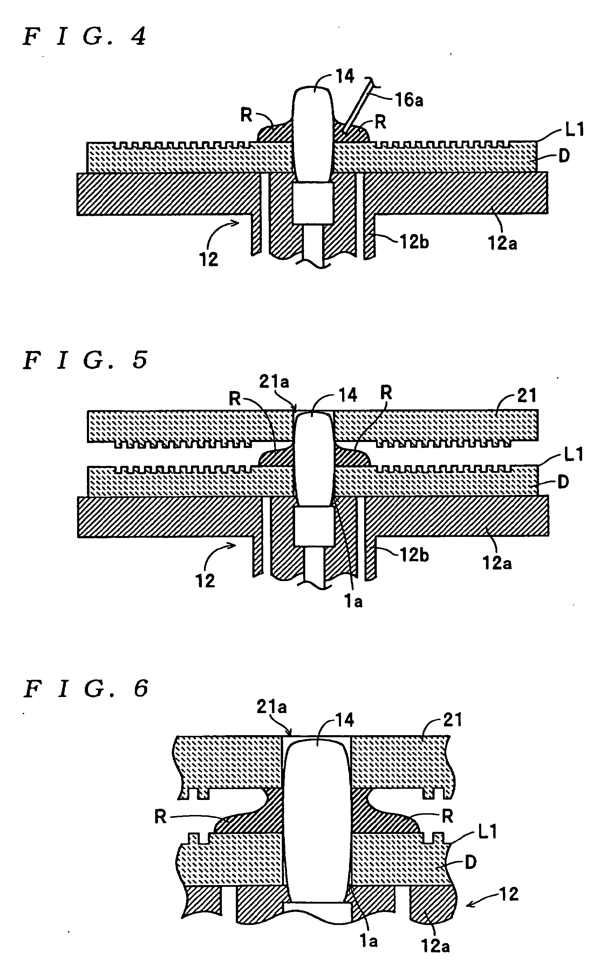

In this case, the stamper 21 is a resin stamper or a glass stamper as a dedicated jig for manufacturing the multilayer optical recording medium 1, which has a surface thereof subjected to water-repelling treatment, such as fluorine treatment or silicone treatment. As shown in FIG. 5, the stamper 21 is in the form of a disk made of a material capable of transmitting ultraviolet rays (energy radiation) for curing the coating liquid R. Further, the stamper 21 has a lower surface thereof subjected to treatment for forming asperities, such as grooves, lands, and pits, for the recording layer L0. In view of releasability from the spacer layer S, it is preferable that of all the surfaces of the spacer 21, at least the surface formed with the grooves, lands, and pits is subjected to surface treatment, such as fluorine treatment, and it is further preferable that the surface is formed of an amorphous cyclic polyolefin resin having an excellent releasability from an energy radiation curable resin. Further, the stamper 21 has a central portion thereof formed with a central hole 21a having approximately the same diameter as the central mounting hole 1a of the substrate D. On the other hand, the recording layer L0 is formed by forming a phase change film and a protective film on the spacer layer S by the sputtering method. The cover layer C is formed by using a light-transmissive resin such that it has a thickness of approximately 90 µm. In the present embodiment, a doughnut-shaped chucking area having a width of approximately 10 mm is formed between a recording area (area where the grooves, lands, and pits for the recording layers L0 and L1 are formed) and the rim of the central mounting hole 1a.

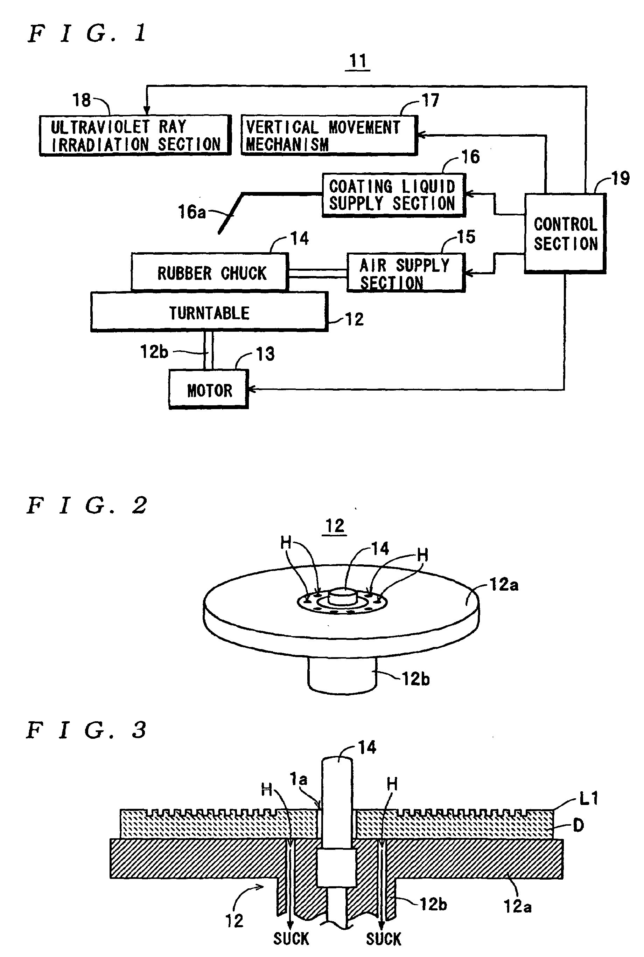

Next, the configuration of the multilayer optical recording medium-manufacturing apparatus for manufacturing a multilayer optical recording medium by the method of manufacturing a multilayer optical recording medium, according to the present invention, will be described with reference to FIGS. 1 to 3.

The coating apparatus 11, which is the multilayer optical recording medium-manufacturing apparatus according to the present invention, forms the spacer layer S by applying the coating liquid R onto the substrate D and then curing the same, when the multilayer optical recording medium 1 is manufactured. The coating apparatus 11 is comprised of a turntable 12, a motor 13, a rubber chuck 14, an air supply section 15, a coating liquid supply section 16, a vertical movement mechanism 17, an ultraviolet ray irradiation section 18 and a control section 19. As shown in FIG. 2, the turntable 12 is comprised of a disk-shaped base 12a having a flat upper surface on which the substrate D can be placed, and a shaft 12b connected to the center of the lower surface of the base 12a and connected to the rotary shaft of the motor 13. It should be noted that the turntable 12 is not limited to the configuration in which the upper surface thereof is flat, but may be configured such that protuberances are formed on the respective radially innermost and outermost portions of the upper surface of the turntable 12 along the circumference thereof such that the substrate D can be placed on the protuberances, to thereby prevent the substrate D from being scratched by contact or otherwise. Further, the turntable 12 has a plurality of suction ports H, H, ..., formed at respective locations opposed to the chucking area of the substrate D. Accordingly, when the coating liquid R is applied, air below the substrate D is sucked by an air pump (not shown) via the suction ports H, H,..., whereby the substrate D is attracted toward the turntable 12. It should be noted that since the air pump for sucking the substrate D is known, illustration in figures and detailed description thereof are omitted.

The motor 13 is controllably driven by the control section 19 to rotate the turntable 12. The rubber chuck 14, which corresponds to a central chuck in the present invention, is mounted in the central portion of the base 12a of the turntable 12. In the present embodiment, the rubber chuck 14 is in the form of a hollow cylinder having a slightly smaller diameter than the central mounting hole 1a of the substrate D, as shown in FIG. 3, such that it can close the central mounting hole 1a of the substrate D by being elastically deformed. Therefore, the rubber chuck 14 also has the function of preventing the substrate D and the stamper 21 from being eccentric to each other during spin-coating, described hereinafter, by being expanded (elastically deformed) within the central mounting hole 1a of the substrate D and the central hole 21a of the stamper 21. Further, the rubber chuck 14 is formed of silicone rubber from which the coating liquid R or the like can be easily separated. However, this is not limitative, but a chuck may be formed e.g. of a resin material whose surface has water or oil repellency, in place of the rubber chuck 14. When air is supplied by the air supply section 15, the rubber chuck 14 is expanded (see FIG. 4) and the peripheral surface thereof comes into contact with the rim of the central mounting hole 1a to close the central mounting hole 1a, thereby fixing the substrate D such that the central portion of the substrate D is positioned in the central portion of the turntable 12. Further, the rubber chuck 14 is replaceably mounted on the base 12a. Therefore, by replacing the rubber chuck 14, as required, to prevent occurrence of a trouble, such as coating non-uniformity or generation of air bubbles, due to a scratch or the like formed on the rubber chuck 14 due to some cause or other, it is possible to stabilize the quality of a coating process for applying the coating liquid R, and hence the quality of the multilayer optical recording medium 1. Furthermore, the replacement frequency is lower compared with the cover member 44, so that it is possible to reduce the cost of the coating process.

On the other hand, the air supply section 15 supplies air to the rubber chuck 14 under the control of the control section 19. The coating liquid supply section 16, which forms a coating liquid-dropping section in the present invention together with the nozzle 16a, drops the coating liquid R for forming the spacer layer S onto the substrate D via the nozzle 16a under the control of the control section 19. In this process, the nozzle 16a is moved vertically upward and downward with respect to the substrate D by a vertical movement mechanism, not shown. The vertical movement mechanism 17 places the stamper 21 on the substrate D under the control of the control section 19. The ultraviolet ray irradiation section 18 applies ultraviolet rays onto the substrate D under the control of the control section 19 to thereby cure the coating liquid R having applied over the surface of the substrate D. The control section 19 controllably drives the motor 13, the air supply section 15, the coating liquid supply section 16, the vertical movement mechanism 17, and the ultraviolet ray irradiation section 18.

Next, the method of manufacturing the multilayer optical recording medium 1 will be described with reference to drawings.

First, the recording layer L1 is formed on the substrate D e.g. by the sputtering method. Then, the spacer layer S is formed by applying the coating liquid R onto the recording layer L1. More specifically, first, the substrate D is placed on the turntable 12 with the surface having the recording layer L1 formed thereon facing upward, as shown in FIG. 3. In doing this, the rubber chuck 14 is inserted through the central mounting hole 1a of the substrate D. In this case, since the rubber chuck 14 is formed to have a hollow cylindrical shape having a smaller diameter than the central mounting hole 1a of the substrate D as described above, it is easy to insert the rubber chuck 14 through the central mounting hole 1a. Then, the air supply section 15 supplies air to the rubber chuck 14 under the control of the control section 19, whereby the rubber chuck 14 is expanded (see FIG. 4). At this time, the peripheral surface of the expanded rubber chuck 14 and the rim of the central mounting hole 1a of the substrate D come into contact with each other, whereby the substrate D is fixed in a state where the central portion thereof is positioned in the central portion of the turntable 12. Then, the control section 19 drives the air pump, not shown, whereby the substrate D is sucked toward the turntable 12. Thus, the substrate D is fixed onto the turntable 12 by the rubber chuck 14 and the air pump.

Next, the control section 19 controllably drives the motor 13 to thereby cause the turntable 12 to rotate at a rotational speed e.g. of approximately 50 rpm. Then, the control section 19 causes the nozzle 16a to move downward and controllably drives the coating liquid supply section 16 to supply the coating liquid R to the nozzle 16a. At this time, the tip of the nozzle 16a is positioned in the vicinity of the boundary portion between the peripheral surface of the rubber chuck 14 and the substrate D, i.e. in the vicinity of the central mounting hole 1a of the substrate D. Then, due to the supply of the coating liquid R by the coating liquid supply section 16, the coating liquid R is dropped from the tip of the nozzle 16a onto the substrate D, as shown in FIG. 4. At this time, the coating liquid R has some degree of viscosity, and hence, immediately after being dropped from the nozzle 16a, the coating liquid R is positioned in the vicinity of the central portion of the substrate D. Further, since the coating liquid R is dropped onto the boundary portion between the rubber chuck 14 and the substrate D, the coating liquid R maintains contact with both the peripheral surface of the rubber chuck 14 and the surface of the substrate D. In this case, the weight of the coating liquid R itself and surface tension acting on the coating liquid R hold the coating liquid R around the rubber chuck 14 in a state surrounding the peripheral surface of the rubber chuck 14.

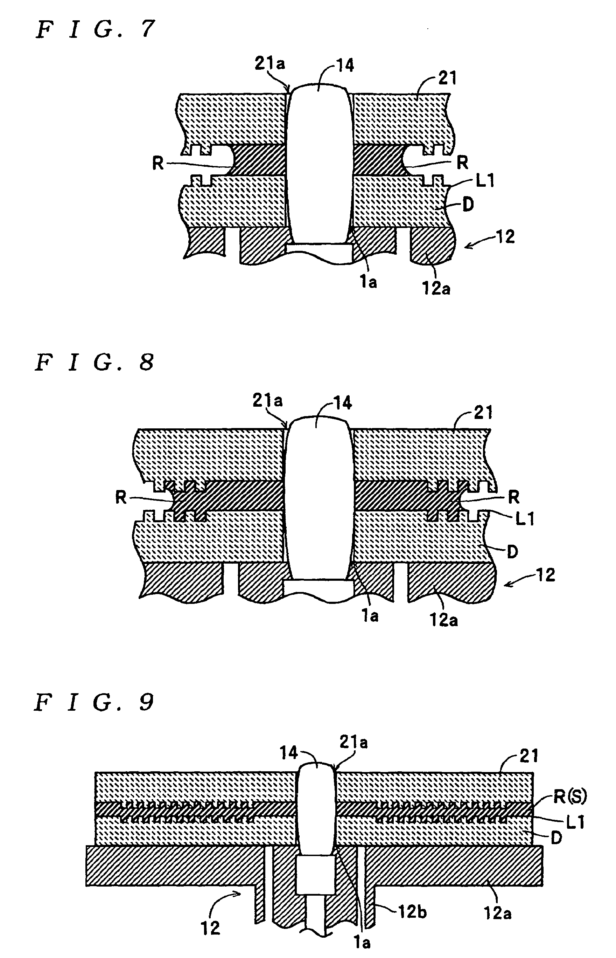

Then, after causing the nozzle 16a to move upward, the control section 19 controllably drives the vertical movement mechanism 17 to place the stamper 21 on the substrate D, as shown in FIG. 5. In doing this, the vertical movement mechanism 17 moves the stamper 21 downward while positioning the stamper 21 such that the rubber chuck 14 can be inserted through the central hole 21a of the stamper 21. At this time, the rubber chuck 14 is expanded, as shown in FIG. 6, and hence the stamper 21 is pushed downward with the rim of the central hole 21a thereof and the peripheral surface of the rubber chuck 14 held in contact with each other. Therefore, when the stamper 21 is being pushed downward to bring the coating liquid R into contact therewith, the coating liquid R surrounding the rubber chuck 14 come into a complete circumferential line contact with the rim of the central hole 21a of the stamper 21 along the periphery of the rubber chuck 14, and then gradually come into plane contact therewith. This prevents air bubbles from intruding between the stamper 21 and the coating liquid R when the stamper 21 and the coating liquid R come into contact with each other. Further, as the stamper 21 is further pushed downward, the coating liquid R is gradually spread toward the outer periphery of the substrate D while conforming to the lower surface of the stamper 21, as shown in FIG. 7. Thus, also at this time, the coating liquid R is spread in a state where intrusion of air bubbles between the stamper 21 and the coating liquid R is prevented.

Then, the control section 19 causes the rotational speed of the motor 13 to be increased to thereby increase the rotational speed of the turntable 12 to e.g. approximately 1000 rpm. This increases the centrifugal force applied to the coating liquid R, and hence, as shown in FIG. 8, the coating liquid R is rapidly spread between the substrate D and the stamper 21 toward the outer periphery of the substrate D. In this process, the coating liquid R is rapidly spread (drawn), with an almost circular shape of the outline thereof in plan view being maintained, while conforming to the upper surface of the substrate D and the lower surface of the stamper 21. At this time, in this coating apparatus 11, the rubber chuck 14 is expanded, whereby the rim of the central mounting hole 1a of the substrate D and the peripheral surface of the rubber chuck 14 are in intimate contact with each other, and at the same time the rim of the central hole 21a of the stamper 21 and the peripheral surface of the rubber chuck 14 are in intimate contact with each other. This causes the coating liquid R to be drawn while preventing air invasion from these portions. Further, as the coating liquid R is drawn, the thickness of the coating liquid R is reduced, and hence the stamper 21 performs translation (downward motion) toward the substrate D by the decreased amount of thickness of the coating liquid R. Therefore, by controlling the rotational speed of the motor 13 and the time period for maintaining high-speed rotation of the same, i.e. by controlling a shake-off amount of the coating liquid R, it is possible to accurately control the coating thickness of the coating liquid R (film thickness of the spacer layer S) to a target value. It should be noted that in this case, the substrate D and the stamper 21 are held in parallel with each other by centrifugal force acting on both of them. As a result, as shown in FIG. 9, the coating thickness of the coating liquid R along the circumference of the substrate D becomes uniform.

In the meantime, excess part of the coating liquid R having reached the radially outermost portion of the substrate D flies off the substrate D by the centrifugal force acting on the substrate D. As a result, a layer of the coating liquid R almost uniformly applied onto the substrate D from the inner periphery to the outer periphery to the target thickness is formed between the substrate D and the stamper 21. Then, the ultraviolet ray irradiation section 18 irradiates the substrate D with ultraviolet rays under the control of the control section 19. As a result, the coating liquid R is cured by the ultraviolet rays applied through the stamper 21, whereby formation of the spacer layer S is completed. Then, the control section 19 carries out stop control of the motor 13 to stop the rotation of the turntable 12. Subsequently, the control section 19 causes the air supply section 15 to stop the supply of air to the rubber chuck 14. As a result, the rubber chuck 14 shrinks, as shown in FIG. 10, whereby a gap is formed between the periphery of the rubber chuck 14 and the rim of the central mounting hole 1a of the substrate D. In this case, since the coating apparatus 11 uses the rubber chuck 14 made of silicone rubber, the coating liquid R in contact with the peripheral surface of the rubber chuck 14 is easily separated from the rubber chuck 14

Next, after stoppage of the air pump, the substrate D is removed from the turntable 12. At this time, since the gap is formed between the rubber chuck 14 and the rim of the central mounting hole 1a, the substrate D is easily removed. Then, the stamper 21 is removed from the substrate D as shown in FIG. 11. To do this, it is preferable that the stamper 21 is formed to have an outer diameter larger than that of the substrate D, which makes it easy to separate (remove) the stamper 21 from the spacer layer S. Thereafter, the recording layer L0 is formed on the spacer layer S, and then the cover layer C is formed by spin-coating the recording layer L0 with a coating liquid and curing the coating liquid on the recording layer L0. This completes the manufacturing of the multilayer optical recording medium 1 as shown in FIG. 12.

As described above, according to the coating apparatus 11, since the coating liquid R is dropped onto the boundary portion between the rubber chuck 14 and the substrate D, the dropped coating liquid R conforms to the peripheral surface of the rubber chuck 14, and when the stamper 21 is placed over the substrate D, the coating liquid R is brought into a complete circumferential contact with the rim of the central hole 21a of the stamper 21, so that it is possible to prevent intrusion of air bubbles which might occur when the stamper 21 is placed over the substrate D. Further, since the rubber chuck 14 which is expanded by air supply is employed, it is possible to prevent intrusion of air from between the central mounting hole 1a of the substrate D and the rubber chuck 14, and hence prevent mixing of air bubbles into the coating liquid R also when the coating liquid R is drawn. As a result, expensive equipment, such as a vacuum chamber, can be dispensed with, which contributes to sufficient reduction of the manufacturing costs of the multilayer optical recording medium 1. Further, when the coating liquid R is drawn, the substrate D and the stamper 21 are held in parallel with each other by centrifugal force, so that the coating thickness of the coating liquid R can be made uniform in circumferential and radial directions of the substrate D.

It should be noted that the present invention is by no means limited to the aforementioned embodiment but it can be modified as required. For example, the shape of the substrate D is not limited to that of a disk, but it is possible to use substrates having various shapes. Further, although in the embodiment of present invention, the multilayer optical recording medium 1 having two recording layers L1 and L0 has been described by way of example, the method of manufacturing a multilayer optical recording medium, according to the present invention can also be effectively applied to the manufacturing of a multilayer optical recording medium having three or more recording layers. Furthermore, although in the embodiment of present invention, the recording layers L0 and L1 each having a phase change film are described by way of example, the recording layers in the present invention are not limited to these, but they may be in the form of recording layers each having a thin film of a dye-based resin, for example. Further, the present invention can be applied to the manufacturing of a ROM having the recording layers L0 and L1 in which information is recorded in advance by forming pits.

Moreover, although in the embodiment of the present invention, the rubber chuck 14 made of silicone rubber is described by way of example, the central chuck in the present invention is not limited to this, but it can be formed of any one of various materials, such as various kinds of rubber, fluorine-based materials, and polyolefins, so long as the material is excellent in releasability from the coating liquid R and elastically deformable. Further, although in the embodiment of the present invention, the example of the rubber chuck 14 which is expanded by air supplied by the air supply section 15 to thereby chuck the substrate D has been described, the central chuck can be formed of a tapered cylindrical rubber having a slightly larger diameter than the central mounting hole 1a. This central chuck makes it possible to chuck the substrate D by its own elasticity.

### Industrial Applicability

As described hereinbefore, the method of manufacturing a multilayer optical recording medium, according to the present invention, is a method of manufacturing a multilayer optical recording medium, by forming N recording layers (N is a natural number equal to or larger than 2) deposited, with a spacer layer sandwiched therebetween, on a substrate having a central portion thereof formed with a central mounting hole, wherein in forming the spacer layer between an (M+1)-th recording layer (M is a natural number equal to or smaller than (N-1)) and an M-th recording layer, as counted from an incident direction of a laser beam to be applied during reproduction or a laser beam to be applied during recording, a central chuck which can undergo elastic deformation at least in radial directions to close the central mounting hole of the substrate is caused to undergo elastic deformation to perform chucking to thereby fix the substrate having the (M+1)-th recording layer formed thereon on a turntable; after a coating liquid for forming the spacer layer is dropped in the vicinity of a boundary portion between a peripheral surface of the central chuck and the substrate, the central chuck is caused to chuck the stamper while allowing the stamper for forming the M-th recording layer thereon to be placed over the substrate; and then the turntable is caused to rotate to thereby spin-coat the coating liquid. This makes it possible to prevent intrusion of air bubbles when the stamper is placed over the substrate and when the coating liquid is drawn, without using expensive equipment, such as a vacuum chamber, which enables mass production of a non-defective multilayer optical recording medium while reducing the manufacturing costs of the same. Further, since the coating liquid is drawn with the stamper being placed over the substrate, the substrate and the stamper can be held in parallel with each other by centrifugal force, so that it is possible to make uniform the coating thickness of the coating liquid. This realizes the method of manufacturing a multilayer optical recording medium, which is capable of forming a spacer layer with a uniform coating thickness while preventing mixing of air bubbles into the spacer layer, without leading to high manufacturing costs of the apparatus.

## Claims

1. A method of manufacturing a multilayer optical recording medium, by forming N recording layers (N is a natural number equal to or larger than 2) deposited, with a spacer layer sandwiched therebetween, on a substrate having a central portion thereof formed with a central mounting hole,
wherein in forming the spacer layer between an (M+1)-th recording layer (M is a natural number equal to or smaller than (N-1)) and an M-th recording layer, as counted from an incident direction of a laser beam to be applied during reproduction or a laser beam to be applied during recording, a central chuck which can undergo elastic deformation at least in radial directions to close the central mounting hole of the substrate is caused to undergo elastic deformation to perform chucking to thereby fix the substrate having the (M+1)-th recording layer formed thereon on a turntable; after a coating liquid for forming the spacer layer is dropped in the vicinity of a boundary portion between a peripheral surface of the central chuck and the substrate, the central chuck is caused to chuck the stamper while allowing the stamper for forming the M-th recording layer thereon to be placed over the substrate; and then the turntable is caused to rotate to thereby spin-coat the coating liquid.

2. A method of manufacturing a multilayer optical recording medium, as claimed in claim 1, wherein an energy radiation-curable resin coating liquid is used as the coating liquid for forming the spacer layer, and a stamper formed of an energy radiation-transmissive material is used as the stamper.

3. A multilayer optical recording medium-manufacturing apparatus for forming the spacer layer in accordance with the method of manufacturing a multilayer optical recording medium, as claimed in claim 1,
the multilayer optical recording medium-manufacturing apparatus comprising a turntable on which the substrate is placed, a central chuck that has a smaller diameter than the central mounting hole of the substrate during non-chucking time, and is expanded by supply of air during chucking time, to close the central mounting hole, an air supply section for supplying air to said central chuck, a coating liquid-dropping section for dropping the coating liquid for forming the spacer layer, and a control section for controllably driving said air supply section and said coating liquid-dropping section.

4. A multilayer optical recording medium-manufacturing apparatus, as claimed in claim 3, wherein said central chuck has a surface thereof formed of a material having water-repellency or oil-repellency.
